# EUROPEAN PATENT APPLICATION

(11) **EP 1 520 686 A2**
(43) Date of publication of application: **06.04.2005**
(21) Application number: 04255361.0
(22) Date of filing: 03.09.2004
(51) Int. Cl.: B29C 67/00

(54) **Fabrication of three-dimensional objects**

(30) Priority: 03.10.2003 US 678564
(71) Applicant: Hewlett-Packard Development Company, L.P., Houston, TX 77070 (US)
(72) Inventor: Oriakhi, Christopher, Corvais OR 97333 (US); Farr, Isaac, Corvallis OR 97333 (US); Kramer, Laura, Corvallis OR 97330 (US); Tsang, Joseph W., Corvallis OR 97330 (US)
(74) Representative: Powell, Stephen David

(57) **Abstract**

A solid free-form fabrication system for producing a three-dimensional object comprises a dispensing system adapted to dispense a build material having nanofiller particles dispersed therein, and a curing system adapted to harden the build material after being dispensed, and the method for producing said three-dimensional object comprises the steps of a) forming a jettable build composition including build material having nanofiller particulates dispersed therein; b) jetting a portion of the build composition to form a build layer; c) curing the build layer; and d) repeating steps b) and c), wherein multiple build layers are contacted and accrued to form a three-dimensional object.

## Description

The present invention is drawn toward the production of solid three-dimensional objects, such as for prototyping applications. More particularly, the present invention is drawn toward the use of one or more ink-jettable compositions, including nanofillers, which can be accrued in layers to form three-dimensional objects.

Printing technologies can be used to create three-dimensional objects from data output of a computerized modeling source. For example, one can design a three-dimensional object using a computer program, and the computer can output the data of the design to a printing system capable of forming the solid three-dimensional object. More specifically, solid free-form fabrication (or layer manufacturing) can be defined generally as a fabrication technology used to build a three-dimensional object using layer by layer or point by point fabrication. With this fabrication process, complex shapes can be formed without the use of a preshaped die or mold.

Essentially, with such a system, an object can be designed using a computer program, such as a Computer Aided Design (CAD) application. Once the object has been designed three-dimensionally, solid free-form fabrication technology enables the translation of the computer generated model into a three-dimensional object. This technology is useful in areas such as verifying a CAD model, evaluating design feasibility, testing part functionality, assessing aesthetics, checking ergonomics of design, aiding in tool and fixture design, creating conceptual models and sales/marketing tools, generating patterns for investment casting, reducing or eliminating engineering changes in production, prototyping, and providing production runs, to name a few.

Typically, a solid free-form fabrication system includes a dispensing system such as an ink-jet dispensing system, a curing or hardening system, and a build platform. The ink-jet dispensing system includes both build material for forming three-dimensional objects, as well as support material for supporting the build material as it hardens. Modeling using ink-jet solid free-form fabrication systems still has room for improvement with respect to mechanical properties. Currently, materials used do not equal the mechanical properties provided by some injection molding or stereolithography. Additionally, dimensional accuracy of objects built using ink-jet solid free-form fabrication systems can also be improved, as materials that can be made to be jettable can undergo shrinkage upon curing or hardening. As such, there is a need to improve both the mechanical properties and dimensional accuracy of objects formed using ink-jet solid free-form fabrication systems.

It has been recognized that certain systems, methods, and composition components can be used for free-form fabrication of solid three-dimensional objects. Specifically, a solid free-form fabrication system for producing a three-dimensional object can comprise a dispensing system adapted to dispense a build material having nanofiller particulates dispersed therein; and a curing system adapted to harden the build material after being dispensed.

Alternatively, a method for producing a three-dimensional object, can comprise steps of a) forming a jettable build composition including build material having nanofiller particulates dispersed therein; b) jetting a portion of the build composition to form a build layer; c) curing the build layer; and d) repeating steps b) and c), wherein multiple build layers are contacted and accrued to form a three-dimensional object.

In another embodiment, a solid three-dimensional object can comprise multiple layers of cured build composition bound to one another, wherein the cured build composition includes build material having nanofiller particulates dispersed therein.

Additional features and advantages of the invention will be apparent from the detailed description that follows, which illustrates, by way of example, features of the invention.

Before the present invention is disclosed and described, it is to be understood that this invention is not limited to the particular process steps and materials disclosed herein because such process steps and materials may vary somewhat. It is also to be understood that the terminology used herein is used for the purpose of describing particular embodiments only. The terms are not intended to be limiting because the scope of the present invention is intended to be limited only by the appended claims and equivalents thereof.

It must be noted that, as used in this specification and the appended claims, the singular forms "a," "an," and "the" include plural referents unless the context clearly dictates otherwise.

The term "ink-jetting" or "jetting" refers to compositions that are ejected from jetting architecture, such as ink-jet architecture. The use of the term "ink-jetting" does not infer that it is necessarily "ink" that is being jetted from the architecture. Ink-jet architecture can include thermal or piezo architecture.

The term "solid three-dimensional object" or "three-dimensional object" refers to objects that are formed by the fabrication method of the present invention. Solid three-dimensional objects are sufficiently solid or firm so as to maintain a fixed volume and shape to an extent which is appropriate for use in solid free-form fabrication. In some embodiments, such objects need not be strictly rigid, such as in cases where the object formed is self-supporting at minimum, or alternatively, flexible.

The term "hardening," "curing," "solidifying," or the like, refers to a change that occurs when the build material and/or the support material are modified from a more liquid state to a more solid state. The process of solidifying can occur as a result of electromagnetic irradiation, e.g., UV curing, by overprinting or under printing a reactive chemical therewith, e.g., epoxy build material jetted with an amine, for example.

"Build material" includes substances that can be used to form the bulk of the solid three-dimensional object to be formed. These build materials typically include groups that can be solidified as a result of exposure to electromagnetic irradiation, such as UV radiation, as a result of a chemical reaction with a curing agent, or as a result of reducing the temperature of the material. Build materials can include a liquid modifier admixed therewith when it is desired to alter the jettability properties, such as with respect to viscosity, surface tension, and the like. Temperature adjustment can also be used to alter the jettability properties as well. Examples of build materials that can be used include UV photopolymers, epoxies, acrylates, and urethanes. Many UV curable materials can also be used which are commonly known to those skilled in the art, and are used throughout the industry in a variety of systems, such as stereolithography systems, jetted photopolymer systems, and the like.

"Support material" includes substances that are deposited, such as by ink-jet technology, for the purpose of supporting overhangs of build material present in a solid three-dimensional object during the build process. This material is typically of a material that can be relatively easily removed after the build process is complete, and can be configured to be placed as determined by the object being built. For example, a voxel, or point in three-dimensional space, that defines the placement of build material, cannot be deposited in mid-air. Thus, support for such build material is needed whenever build material is being printed at a location that is not otherwise supported by a build platform or previously applied build material. Removable materials that can be used include the use of wax, patterned hardening composition, water swellable gel, readily meltable material, readily soluble material, or another material that can carry the solid three-dimensional object being built, as well as be configured to be readily removed. Removal can be by heating, chemical reaction, power washing, or other similar methods.

"Curing agent" includes substances that can react with reactive groups of a build material, thereby curing the build material. Curing agents can also include liquid modifiers admixed therewith, though this is not required, as long as the curing agent has desirable ink-jetting properties. Temperature adjustment can also be used to alter the jettability properties as well. With respect to both build material and curing agent, it is recognized that in certain instances, it may be difficult to determine which composition of a two part reactive system is the build material and which composition is the curing agent. As long as the two parts can come together and form a solid three-dimensional object in accordance with embodiments of the present invention, this distinction is less important. However, for exemplary purposes, one can consider the build material to be present at higher content in the reactive mix, and very often, has a higher molecular weight than the curing agent. A curing agent is one type of curing system that can be used in accordance with embodiments of the present invention.

"Nanofiller particulate" refers to particulates from 1 to 500 nm in size that can be dispersed within a build material to provide improved mechanical properties and/or dimensional accuracy. Examples of such materials include inorganic nanoparticulates, organic-inorganic hybrid nanocomposites, curable liquid crystals, and combinations thereof.

A "build platform" is typically the rigid substrate that is used to support a solid three-dimensional object as it is being formed.

The term "substrate" can include the build platform, previously deposited support material, and/or previously deposited build material, depending on the context. For example, in one embodiment, support material can be applied to a build platform to enable easy removal of the solid three-dimensional object from the build platform. In this case, the build platform is the substrate for the support material. Alternatively, previously deposited build material and/or support material can be a substrate for subsequently applied build material and/or support material. To illustrate, when laying down an initial layer of a build material and/or support material, the initial layer will typically be carried by a build platform or a removable material on the build platform. However, subsequent layers of build material and/or support material can be deposited onto the previously deposited layer substrate.

As used herein, "liquid modifier" refers to any composition that can be prepared for jetting with a build material or a support material, and which, in combination, can be jetted from a dispensing architecture, such as ink-jet pen architecture. Optionally, the liquid modifier can be a colorant to be jetted with the build material. A wide variety of other liquid modifiers can be used with the systems and methods of the present invention. For example, such liquid modifiers that can be used include water, surfactants, organic solvents and co-solvents, buffers, biocides, sequestering agents, viscosity modifiers, as well as soluble low molecular weight monomers, oligomers, and polymers, etc.

Though liquid modifiers are described herein in some detail, it is not always required that a liquid modifier be used. In some embodiments, the build material or the support material can be configured to be jetted from an ink-jet architecture without the use of a liquid modifier. For example, a wax can be heated to a jettable temperature and cooled upon application to form a solidified build material object or support material. However, if such liquid modifiers are used, they are typically present in small amounts. An example where a liquid modifier can be added is with respect to embodiments wherein it is desired to alter the viscosity, surface tension, or the like, of the build material and/or the support material. This being stated, modification of jettable compositions with a liquid modifier is not required, and in some cases, can be undesirable.

With these definitions in mind, a solid free-form fabrication system for producing a three-dimensional object can comprise a dispensing system and a curing system. The dispensing system, such as an ink-jet dispensing system, can be adapted to dispense a build material having nanofiller particulates dispersed therein. The curing system can be adapted to harden the build material after being dispensed, such as by UV curing, or by chemical curing using a curing agent.

Additionally, a method for producing a three-dimensional object can comprise steps of a) forming a jettable build composition including build material having nanofiller particulates dispersed therein; b) jetting a portion of the build composition to form a build layer; c) curing the build layer; and d) repeating steps b) and c), wherein multiple build layers are contacted and accrued to form a three-dimensional object. The curing step can be by UV curing or by chemical curing, as non-limiting examples.

Additionally, a solid three-dimensional object can comprise multiple layers of a cured build composition bound to one another, wherein the cured build composition includes build material having nanofiller particulates dispersed therein.

The systems, methods, and solid three-dimensional objects of the present invention can be further described with respect to additional detailed embodiments. For example, in one embodiment, the nanofiller particulates can be substantially from 1 and 500 nm in size, and can be dispersed within the build material at from 0.1 wt% to 20 wt%. Exemplary nanofiller particulates include inorganic nanoparticulates, organic-inorganic hybrid nanocomposites, curable liquid crystals, or combinations thereof. Examples of inorganic nanoparticulates include silica, alumina, titania, zirconia, hydroxyapatite, and combinations thereof. Examples of organic-inorganic hybrid nanocomposites include montmorillonite organo-clay, PMMA-clay nanocomposites, epoxy-clay nanocomposites, PMMA-co-MMA clay nanocomposites, starch-clay nanocompostes, and combinations thereof. Examples of curable liquid crystals include low viscosity oligomeric liquid crystals, reactive monomeric liquid crystals, and combinations thereof.

Though the invention is described primarily as it relates to the build material, dispensing systems can also include support material, such as to support build material overhangs. Additionally, milling systems can be present that are adapted to mill, or plane, the build material after being dispensed but before being hardened. Such milling systems can include, for example, rollers that apply pressure to newly jetted build material and/or support material.

The build platform that can be used can be configured to support the build material during application, and can be further configured to be lowered with respect to the dispensing system upon application of build material. Alternatively, the dispensing system can be configured to be raised with respect to the build platform upon application of build material. More specifically, with respect to the build platform or substrate, such a platform can include removable material such as wax, patterned hardening composition, water swellable gel, readily meltable material, readily soluble material, or another material that can carry the solid three-dimensional object being built, as well as be configured to be readily removed. For example, in one embodiment, the build platform substrate can initially be of a removable material upon which the build material and/or the support material are deposited.

In another embodiment, in order to configure the build material and/or support material to be dispensable from ink-jet architecture, a heating system can be present that is associated with the architecture that is configured to modify the temperature of the build material while within the dispensing system, thereby improving jettability of the build material.

Regarding the curing system, either UV curing, e.g., use of UV energy; chemical curing, e.g., use of curing agent; or curing accelerant can be used in accordance with embodiments of the present invention. For example, with UV curing, UV energy can be applied to build material that has been deposited on a substrate, thereby hardening or solidifying the build composition. Examples of UV curable build materials include acrylates, methacrylates, epoxy acrylates, urethane acrylates, polyester acrylates, vinyl ethers, styrene, and cationic cure epoxies. With these materials, UV energy from 250 nm to 450 nm in wavelength and power levels from 20 to 300 mW/cm² can be used.

Alternatively, if chemical curing, a volume ratio of build material to curing agent can be from 1:1 to 100:1. An example of a build material that can be used in chemical curing systems includes an epoxy. Epoxies can be cured using one of many known substances that react with the epoxy group to open its epoxide ring structure(s). Examples of functional groups that can be capable of reacting with an epoxide ring in this manner are amino groups, hydroxyl groups, and carboxyl groups. Other examples of a chemical curing system include polyisocyanate build materials and polyol curing agent, and functionalized silicone build materials and curing agents reactive with the functionality, to name a few. In this embodiment, the particulate nanofillers can be present in the build material and/or the curing agent. It is also notable that UV curing can also be used in conjunction with chemical curing. In another embodiment, one can apply heat to the build material after deposition in order to accelerate curing. Ultrasonic energy can also optionally be applied to the build material after deposition to facilitate mixing when the build material is cured using a second composition, such as a curing agent, as ultrasonic energy can improve contact between the build material and the curing agent.

In accordance with other aspects of the invention, the build material can be configured to be jettable from ink-jet architecture. As such, in one embodiment, the build material can, in preparation for jetting, be brought to a viscosity which is less than 70 cP, and a temperature less than 200°C. Either thermal ink-jet pens or piezo ink-jet pens can be used. In a more detailed aspect, a viscosity near 15 cP has been found to be desirable in some circumstances. As is known in the art, the viscosity of a fluid can generally be lowered by increasing its temperature. As the build material (or other jettable material, such as curing agent or support material, etc.) is used to form solid objects, the use of higher temperatures can allow more viscous higher molecular weight materials to be used, which can provide for increased toughness of the solid three-dimensional object upon cooling. In addition to the heating option, the viscosity of a fluid can also be lowered by adding low molecular weight monomers and oligomers, and/or by adding small amounts of liquid modifier.

Colorant can also be added to the build material in order to color the solid three-dimensional object. The colorant can include dye(s) and/or pigment(s). Colorants generally used in printing include black, magenta, cyan, and yellow, but other colors can also be used. Colorant can also or alternatively be added to an alternative jetting fluid, such as curing agent or support material.

With respect to embodiments wherein the dispensing system is an ink-jet printing system, various techniques can be used to modify the viscosity or other jetting properties of the build material and/or support material. For example, heat can be used to liquefy material such that it becomes ink-jettable. An appropriate heat range is composition specific, and can range from 20°C to 200°C. To provide a specific example, in one embodiment, if the build material is an acrylate, then a temperature range that can be used is from 40°C to 150°C.

Alternatively, liquid modifier components can be added to build material and/or support material to modify properties. Examples of liquid modifier components that can be used, in small amounts if at all, include water, surfactants, organic solvents and co-solvents, buffers, biocides, sequestering agents, viscosity modifiers, as well as soluble low molecular weight monomers, oligomers, and polymers, etc. As mentioned, liquid modifiers are typically not added to carry the build material and/or the support material, but can optionally be added to modify jetting characteristics, such as viscosity, surface tension, or other properties.

### EXAMPLES

The following examples illustrate the embodiments of the invention that are presently best known. However, it is to be understood that the following examples are only exemplary or illustrative of the application of the principles of the present invention. Numerous modifications and alternative compositions, methods, and systems may be devised by those skilled in the art without departing from the spirit and scope of the present invention. The appended claims are intended to cover such modifications and arrangements. Thus, while the present invention has been described above with particularity, the following Examples provide further detail in connection with what are presently deemed to be the most practical and preferred embodiments of the invention.

### Example 1 - Preparation of inorganic nanoparticulate-containing build material

To an acrylate based, UV-curable resin (Full Cure S-120 available from Objet) was added 2 wt% hydroxyapatite inorganic nanoparticles. The hydroxyapatite nanoparticles were rod shaped and were from 60 nm to 100 nm in size. By heating the inorganic nanoparticulate-containing build material prepared in accordance with the present example to a temperature from 60°C to 100°C, the composition can made to be jettable from ink-jet architecture. The resin including the nanoparticles was cast onto a plate at room temperature and then exposed to a UV source, which rapidly cured and hardened the resin portion of the composition.

### Example 2 - Preparation of organic-inorganic hybrid particulate-containing build material

To an acrylate based, UV-curable resin (Full Cure S-120 available from Objet) was added 2 wt% NanoPGW (Nanocor), which is a polymer grade montmorillonite. The NanoPGW was platelet shaped and was from 1 nm to 400 nm in size. By heating the NanoPGW-containing build material prepared in accordance with the present example to a temperature from 60°C to 100°C, the composition can made to be jettable from ink-jet architecture. The resin including the NanoPGW was cast onto a plate at room temperature and then exposed to a UV source, which rapidly cured and hardened the resin portion of the composition.

### Example 3 - Preparation of organic-inorganic hybrid particulate-containing build material

To an acrylate based, UV-curable resin (Full Cure S-120 available from Objet) was added 2 wt% Cloisite 20A (Southern Clay), which is a natural montmorillonite modified with a quaternary ammonium salt. The Cloisite 20A was platelet shaped and was from 1 nm to 150 nm in size. By heating the Cloisite 20A-containing build material prepared in accordance with the present example to a temperature from 60°C to 100°C, the composition can made to be jettable from ink-jet architecture. The resin including the Cloisite 20A was cast onto a plate at room temperature and then exposed to a UV source, which rapidly cured and hardened the resin portion of the composition.

While the present invention has been described with reference to certain preferred embodiments, those skilled in the art will appreciate that various modifications, changes, omissions, and substitutions can be made without departing from the invention. It is to be understood that the present invention is not limited to the disclosed embodiments. The invention is intended to cover various modifications and equivalent arrangements included within the spirit and scope of the claims. Therefore, it is intended that the invention be limited only by the scope of the following claims, where the claims are to be given the broadest interpretation so as to encompass all such modifications and equivalent arrangements.

## Claims

1. A solid free-form fabrication system for producing a three-dimensional object, comprising:
a dispensing system adapted to dispense a build material having nanofiller particulates dispersed therein; and
a curing system adapted to harden the build material after being dispensed.

2. A system as in claim 1, wherein the dispensing system includes an ink-jet printing dispensing system and is also adapted to dispense support material configured to support build material overhangs.

3. A system as in claim 1, wherein the build material includes a UV curable material and the curing system includes a UV curing system.

4. A system as in claim 1, wherein the build material includes a reactive build material and the curing systems includes a curing agent configured to be contacted with the reactive build material.

5. A system as in claim 1, further comprising a milling system adapted to mill the build material after being dispensed but before being hardened.

6. A system as in claim 1, further comprising a build platform configured to support the build material, wherein upon application of a layer of build material:
a) the build platform is configured to be lowered with respect to the dispensing system, or
b) the dispensing system is configured to be raised with respect to the build platform.

7. A system as in claim 1, further comprising a heating system configured to modify the temperature of the build material while within the dispensing system, thereby improving jettability of the build material.

8. A system as in claim 1, wherein the nanofiller particulates are substantially from 1 nm and 500 nm in size, and are dispersed within the build material at from 0.1 wt% to 20 wt%.

9. A system as in claim 1, wherein the nanofiller particulates are selected from the group consisting of inorganic nanoparticulates, organic-inorganic hybrid nanocomposites, curable liquid crystals, and combinations thereof.

10. A method for producing a three-dimensional object, comprising:
a) forming a jettable build composition including build material having nanofiller particulates dispersed therein,
b) jetting a portion of the build composition to form a build layer;
c) curing the build layer; and
d) repeating steps b) and c), wherein multiple build layers are contacted and accrued to form a three-dimensional object.

11. A method as in claim 10, wherein the step of curing is by UV curing.

12. A method as in claim 10, wherein the step of curing is by contacting and reacting the build material with a curing agent.

13. A method as in claim 10, further comprising the step of milling the build layer before curing.

14. A method as in claim 10, further comprising the step of adjusting the distance between the build composition and the build layer prior to the repeating step.

15. A method as in claim 10, wherein the step of forming a jettable build composition includes heating the composition to a temperature that makes the composition jettable.

16. A method as in claim 10, wherein the nanofiller particulates are substantially from 1 nm to 500 nm in size, and are dispersed within the build material at from 0.1 wt% to 20 wt%.

17. A method as in claim 10, wherein the nanofiller particulates are selected from the group consisting of inorganic nanoparticulates, organic-inorganic hybrid nanocomposites, curable liquid crystals, and combinations thereof.

18. A solid three-dimensional object, comprising multiple layers of a cured build composition bound to one another, said cured build composition including build material having nanofiller particulates dispersed therein.

19. An object as in claim 18, wherein the cured build composition is cured by UV energy or by a curing agent.

20. An object as in claim 18, wherein the nanofiller particulates are substantially from 1 nm to 500 nm in size, and are dispersed within the build material at from 0.1 wt% to 20 wt%, and wherein the nanofiller particulates are selected from the group consisting of inorganic nanoparticulates, organic-inorganic hybrid nanocomposites, curable liquid crystals, and combinations thereof.
